# EUROPÄISCHE PATENTSCHRIFT

(11) **EP 0 836 960 B1**
(45) Veröffentlichungstag und Bekanntmachung des Hinweises auf die Patenterteilung: **31.10.2001**
(21) Anmeldenummer: 97114353.2
(22) Anmeldetag: 20.08.1997
(51) Int. Cl.: B60J 7/10

(54) **Cabriolet-Fahrzeug**
Convertible vehicle
Véhicule convertible

(30) Priorität: 15.10.1996 DE 29617882 U
(43) Veröffentlichungstag der Anmeldung: 22.04.1998
(73) Patentinhaber: Wilhelm Karmann GmbH, D-49084 Osnabrück (DE)
(72) Erfinder: Bunsmann, Winfried, 49143 Bissendorf (DE); Thünemann, Bernhard, 49080 Osnabrück (DE)
(74) Vertreter: Busse & Busse Patentanwälte

(56) Entgegenhaltungen:
- DE-U- 9 315 758
- GB-A- 2 164 299

## Beschreibung

Die Erfindung betrifft ein Cabriolet-Fahrzeug mit einem das Verdeck tragenden Verdeckgestell gemäß dem Oberbegriff des Anspruchs 1.

Bei bekannten Cabriolet-Fahrzeugen ist die Verdeckgestell-Baugruppe aus eine Vielzahl von geschweißten und/oder verschraubten Einzelteilen einer Stahlkonstruktion gebildet oder die Baugruppe weist in einer verbesserten Ausführungsform jeweils Einzelbauteile aus Druckguß auf. Die Herstellung dieser Einzelteile und insbesondere deren Montage mit einer Verdeck-Dachhaut ist durch eine Vielzahl von die Dachhaut belastungsstabil festlegenden Verbindungspaarungen überaus aufwendig.

Der Erfindung liegt die Aufgabe zugrunde, ein Cabriolet-Fahrzeug der im Oberbegriff des Anspruchs 1 genannten Art zu schaffen, dessen Verdeckgestell aus weitgehend integrierten Einzelbaugruppen besteht, die bei reduziertem Gewicht eine insgesamt vereinfachte Montage und hinreichend stabile Aufnahme sowohl eines von einer flexiblen Dachhaut gebildeten Verdecks als auch eines Hardtop-Verdecks ermöglichen.

Ausgehend von einem Cabriolet-Fahrzeug nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 18 verwiesen.

Das erfindungsgemäß ausgebildete Verdeckgestell weist im Bereich seiner Strangpreßprofil- und/oder Druckgußteile jeweils eine Querschnittsgeometrie auf, die mit einer auf geringen Materialverbrauch gerichtete Hohlraumstruktur bei verbesserter Stabilität insgesamt eine Gewichtsreduzierung des Verdeckgestells gewährleistet, wobei gleichzeitig die zu einer Leicht-Baugruppe zusammengefaßten Profilteile mit jeweiligen Aufnahmeprofilierungen und/oder Hinterschneidungen im Querschnitt versehen sind, so daß damit für entsprechende Gegenglieder von zugeordneten Bauteilen und/oder Verbindungsteilen der als Softtop vorgesehenen Dachhaut bzw. des Hardtops überaus einfach montierbare Verbindungsbereiche geschaffen sind.

Die Strangpreßprofile und Druckgußteile können bei niedrigen Herstellungskosten mit geringem Aufwand an unterschiedliche Stütz- und Haltebedingungen, insbesondere im Bereich der Verbindungspaarungen bei der Dach-Montage, angepaßt werden. Dabei sind in der Querschnittsgeometrie der Strangpreßprofilteile jeweilige Kanäle und Öffnungen zum Befestigen von Dichtungen oder dergleichen so integriert, daß zusätzliche Bearbeitungsschritte vor der Montage des Leichtbautragwerks weitgehend entbehrlich sind oder gänzlich eingespart werden.

Für die Aufnahme eines Hardtops oder eines Softtops auf dem Leichtbautragwerk ist dieses als ein starrer Gitterverbundrahmen ausgebildet, dessen Seitenrahmenteile über ein Dachspitzteil, einen Überrollbügel und einen heckseitigen Spannbügel in Querrichtung so ausgesteift sind, daß ein verwindungssteifer Unterbau für das Hardtop erreicht ist. Diese Grundkonzeption des Leichtbautragwerkes ermöglicht eine weitgehende Kostensenkung bei der Fertigung des Dachs, da die zu verarbeitenden Serien-Profilteile als Halbzeug sowohl für die Herstellung klappbarer Verdeckgestelle als auch von starren Gitterverbundrahmen einsetzbar sind und gleichzeitig die Verbindungsteile bzw. -profile zur Dachhaut bzw. zum Hardtop mit geringen konstruktiven Abweichungen so anwendbar sind, daß weitgehend gleiche Montagebedingungen eine Senkung der Gestehungskosten ermöglichen.

Weitere Einzelheiten und Vorteile der Erfindung ergeben sich aus der nachfolgenden Beschreibung und der Zeichnung, die ein Ausführungsbeispiel des Gegenstandes der Erfindung schematisch veranschaulicht. In der Zeichnung zeigen:
- Fig. 1: eine perspektivische Einzeldarstellung eines aus Strangpreßprofilteilen und/oder Druckgußteilen bestehenden Leichtbautragwerkes gemäß der Erfindung,
- Fig. 2: eine Explosivdarstellung des Leichtbautragwerkes gemäß Fig. 1 mit einem auf diesem festlegbaren Hardtop-Teil,
- Fig. 3: eine Ausschnittsdarstellung des Druckgußteiles im Bereich der Dachspitze mit dem Hardtop in Verbindungsstellung gemäß einer Linie III-III in Fig. 1,
- Fig. 4: eine Ausschnittsdarstellung eines Strangpreßprofilteiles im Bereich des Seitenrahmens gemäß einer Linie IV-IV in Fig. 1,
- Fig. 5: eine Ausschnittsdarstellung des Seitenrahmens gemäß Fig. 4 mit einem Verbindungsbereich zur Dachhaut in einer zweiten Ausführungsform,
- Fig. 6: eine Ausschnittsdarstellung des Seitenrahmens ähnlich Fig. 4 in einer dritten Ausführungsform, und
- Fig. 7: eine Ausschnittsdarstellung im Bereich eines heckseitigen Verbindungsknotens mit Teilen des Leichtbautragwerkes gemäß einer Linie VI-VI in Fig. 1.

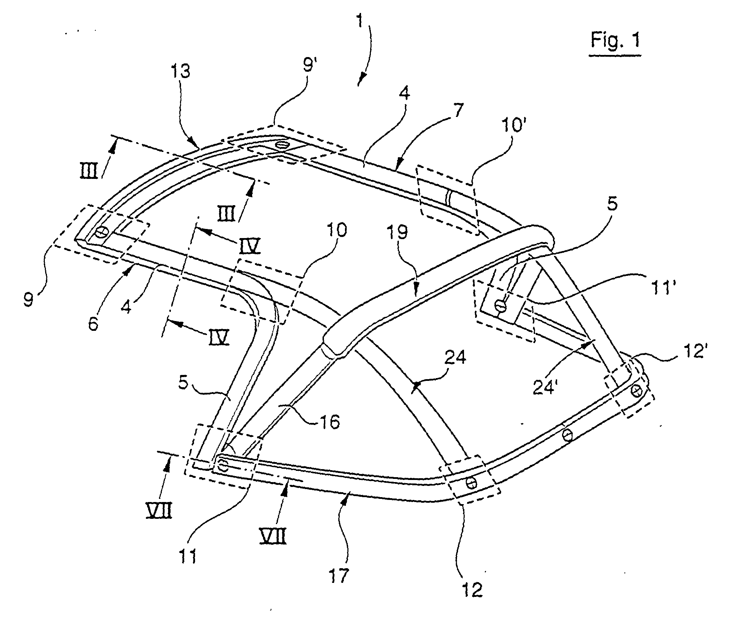

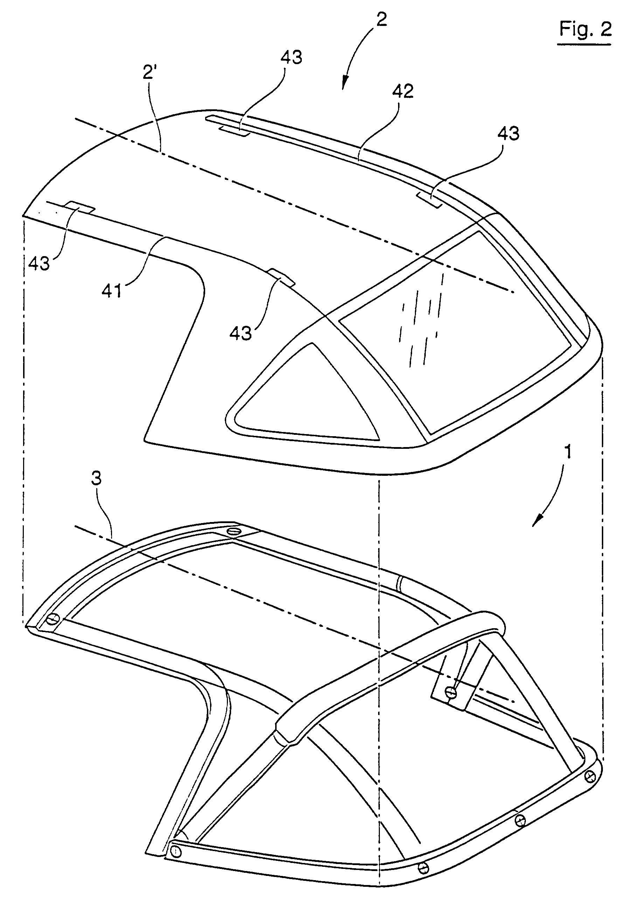

In Fig. 1 ist ein insgesamt mit 1 bezeichnetes Verdeckgestell eines nicht näher dargestellten Cabriolet-Fahrzeuges veranschaulicht, auf dem insbesondere ein festes Aufsetzdach 2 in Form eines Hardtops 2' (Fig. 2) festlegbar ist. Das Verdeckgestell 1 ist mit symmetrisch zur Fahrzeuglängsachse 3 angeordneten sowie aus vorderen und hinteren Teilstücken 4,5 bestehenden Seitenrahmenteilen 6,7 versehen, die ausgehend vom Bereich eines am Windschutzscheibenrahmen (nicht dargestellt) anlegbaren Dachspitzenteiles 13 zum Heckbereich der Fahrzeugkarosserie hin verlaufen.

Das Verdeckgestell 1 weist in erfindungsgemäßer Ausbildung ein in seinen wesentlichen Konstruktionselementen aus Strangpreßprofilteilen und/oder Druckgußteilen gebildetes Leichtbautragwerk auf, das ganz oder überwiegend aus Aluminium besteht. Die Strangpreßprofil- und/oder Druckgußteile sind im Bereich jeweiliger Verbindungsknoten 9,10,11,12 bzw. 9',10',11',12' so verbunden, daß das Leichtbautragwerk nach Art eines starren Gitterverbundrahmens ausgesteift ist und auf diesem das in Form eines einstückigen Hardtops 2' oder eines Softtops (nicht dargestellt) aufsetzbare Verdeck über einen lösbaren oder unlösbaren Verbindungseingriff festlegbar ist (Fig. 2).

Das Leichtbautragwerk 1 ist dabei mit einem sich in Querrichtung über den Heckbereich des Fahrzeugs erstreckenden Überrollbügel 15 als im wesentlichen einstückiges Strangpreßprofilteil 16 versehen, das jeweils endseitig mit den einstückig ausgebildeten Seitenrahmenteilen 6 und 7 sowie einem heckseitigen Spannbügel 17 in dem gemeinsamen Haupt-Verbindungsknoten 11 bzw. 11' verbunden ist.

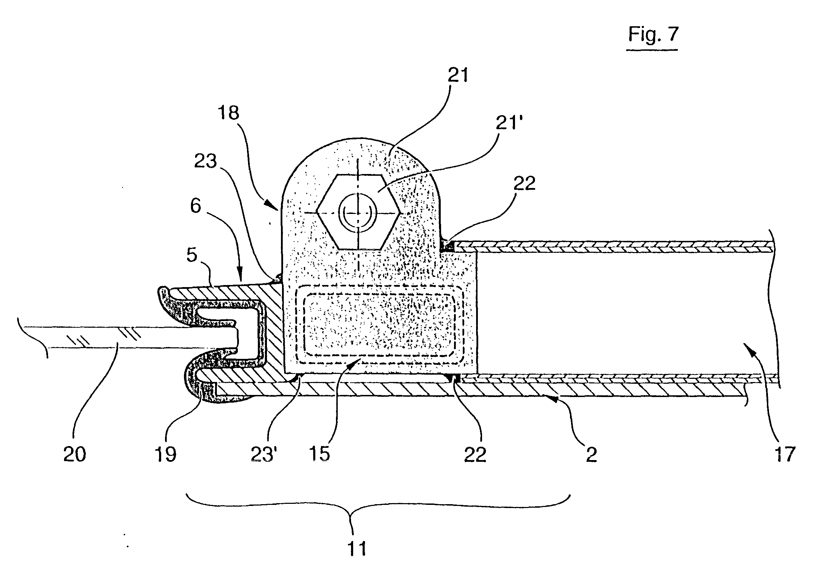

Die vergrößerte Einzeldarstellung gemäß Fig. 7 verdeutlicht, daß der Haupt-Verbindungsknoten 11 mit einem als Druckgußteil vorgesehenen Stützkörper 18 ausgebildet ist und dieser mit dem Spannbügel 17, dem Überrollbügel 15 und dem Seitenrahmenteil 6 bzw. dessen hinteren Teilstück 5 verschweißt ist. Das Seitenrahmenteil 6 ist dabei als ein im Bereich des hinteren Teils 5 zum Stützkörper 18 hin gebogenes und im wesentlichen der Kontur einer Seitenscheibe 20 folgendes U-Profil vorgesehen, in dem ein als Lippenprofil ausgebildetes Dichtungsteil 19 zur Abstützung der Seitenscheibe 20 vorgesehen ist.

Der Stützkörper 18 weist auf seiner zum Innenraum des Fahrzeugs gerichteten Seite einen Befestigungsansatz 21 auf, in dem ein Verschlußzapfen und/oder eine Verschraubung 21' aufnehmbar ist. In der dargestellten Verbindungsstellung (Fig. 7) sind sowohl der Spannbügel 17 als auch das Seitenrahmenteil 6 im Bereich des Stützkörpers 18 mit dem Hardtop 2 über jeweilige Schweißnähte 22, 22', 23, 23' verbunden.

Das erfindungsgemäße Leichtbautragwerk 1 weist im Bereich der Seitenrahmenteile 6,7 (Fig. 1) jeweils ein sich im wesentlich parallel zur Fahrzeuglängsachse 3 erstreckendes Strebenteil 24, 24' auf, das mit dem heckseitigen Spannbügel 17 im Bereich der Verbindungsknoten 12,12' verbunden ist. Im vorderen Bereich sind die Strebenteile 24, 24' im Bereich der Verbindungsknoten 10, 10' am vorderen Teil des jeweiligen Seitenrahmens 6, 7 abgestützt und ausgehend von diesem als Schweißverbindung vorgesehenen Knotenbereich untergreifen die beiden Strebenteile 24 und 24' in ihrer Stützkontur den Überrollbügel 15. Im Bereich der Verbindungsknoten 12, 12' ist das jeweilige Strebenteil 24, 25 in zweckmäßiger Ausführung mit dem Spannbügel 17 verschweißt.

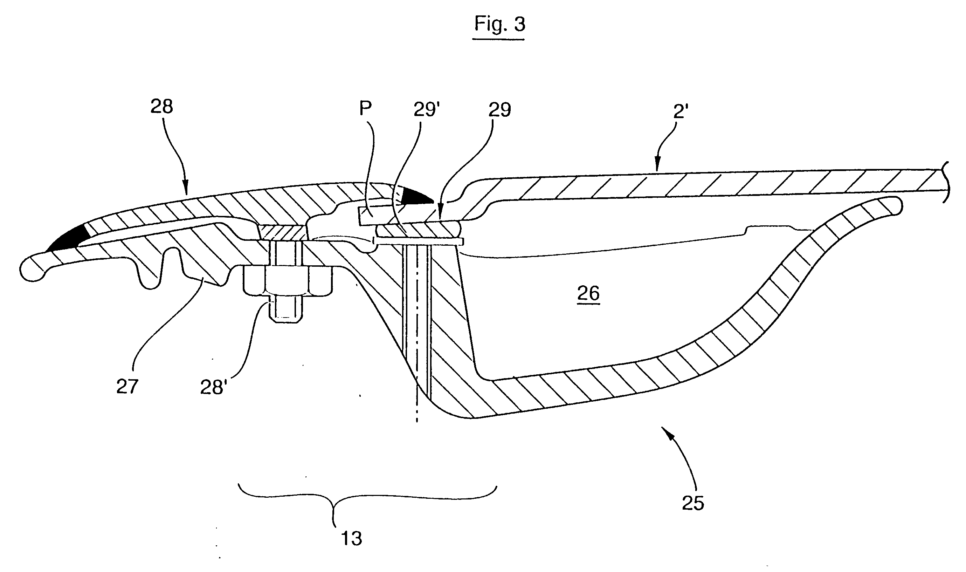

In Fig. 3 ist ein für den Bereich der Dachspitze 13 vorgesehenes Druckgußteil 25 dargestellt, wobei dieses im Querschnitt als ein eine Aufnahme- und Stützprofilierung darbietendes Rinnenprofil 26 ausgebildet ist und dessen in Einbaulage vorderer Auflageschenkel 27 oberseitig das Hardtop-Verdeck 2 abstützt. In zweckmäßiger Ausführung ist am Rinnenprofil 26 eine einerseits an dessen Auflageschenkel 27 abgestützte Abdeckblende 28 vorgesehen, die andererseits randseitig das Hardtop 2 im Bereich einer Dichtverbindung 29 übergreift. Die Abdeckblende 28 ist in zweckmäßiger Ausführung über eine Schraubverbindung 28' lösbar festgelegt, mittels der im Bereich der Dichtverbindung 29 beispielsweise ein elastisches Dichtprofil 29' gemeinsam mit dem Randprofil P des Hardtops 2 verspannt werden kann.

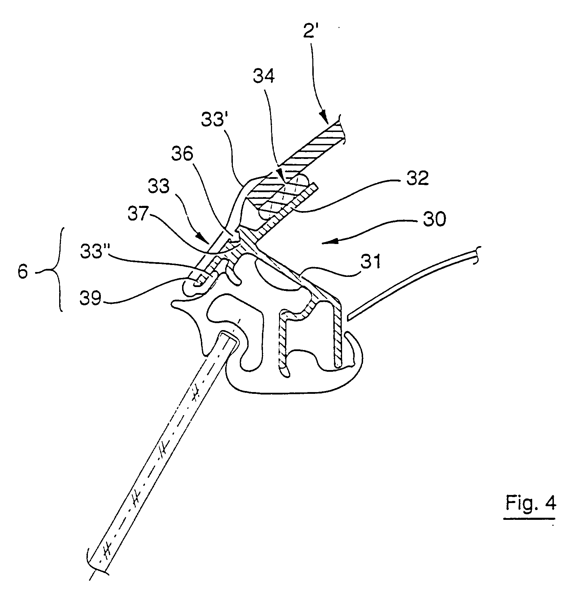

Die Ausschnittsdarstellungen gemäß Fig. 4 bis 6 verdeutlichen zwei Ausführungsformen eines Strangpreßprofilteils 30, 30' im Bereich der jeweiligen Seitenrahmen 6,7. Diese Profile 30, 30' sind als ein nach unten offenes U-Profil ausgebildet, an dessen Basisschenkel 31 zusätzlich ein randseitig das Hardtop 2' untergreifender und zu diesem hin gerichteter Tragschenkel 32, 32' vorgesehen ist. In der Ausführungsform gemäß Fig. 4 ist das U-Profil 30 im Bereich des Tragschenkels 32 mit einer diesen randseitig übergreifenden Deckblende 33 verbunden. Diese ist einerseits über einen Stützbogen 33'' am Basis-U-Profil 30 abgestützt und zwischen deren freien Ende 33' und dem Tragschenkel 32 ist das Hardtop 2' randseitig festgelegt. An diesem Verbindungsbereich kann eine Dicht- und Stützverbindung 34 (Fig. 4) beispielsweise über eine Klebeverbindung oder einen elastischen Stützkörper gebildet sein.

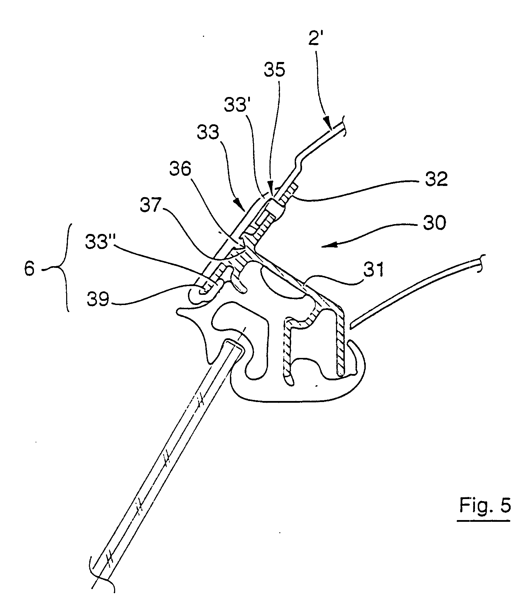

In der Ausführung gemäß Fig. 5 ist eine Nietverbindung 35 zum Hardtop 2' hin vorgesehen. Im fußseitigen Bereich des Tragschenkels 32 weist außerdem das U-Profil 30 (Fig. 4, Fig. 5) zusätzlich eine ein Gegenglied 36 der Abdeckblende 33 aufnehmende Rastprofilform 37 auf.

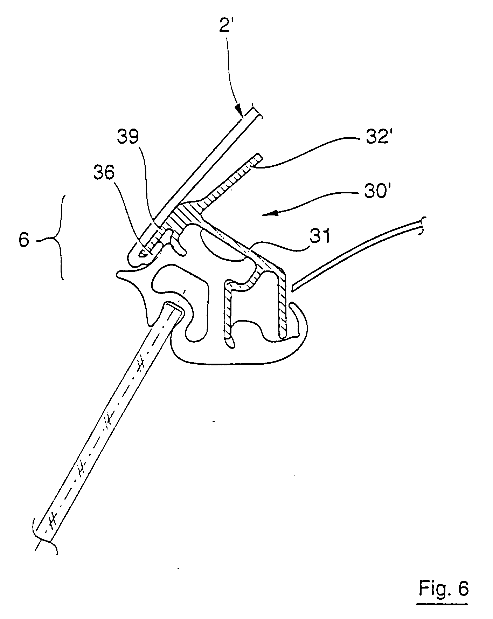

In der Ausführungsform gemäß Fig. 6 übergreift das Hardtop 2' den Tragschenkel 32 und ist seinerseits über eine unmittelbar als Halteteil wirksame Randabkantung 38 an einem Halteschenkel 39 des U-Profils 30' festgelegt.

Die perspektivischen Darstellungen des Hardtops 2 gemäß Fig. 2 verdeutlicht, daß dieses in zweckmäßiger Ausführung mit randseitig parallel zur Fahrzeuglängsachse 3 verlaufenden Aussteifungsbereichen 41,42 versehen ist, in deren Bereich das Hardtop 2 mit verschließbaren Durchgangsöffnungen 43 versehen sein kann, die in ihrer Öffnungsstellung jeweilige Stützteile eines Dachgepäckträgers (nicht dargestellt) derart aufnehmen, daß dieser am Leichtbautragwerk 1, beispielsweise an den Seitenrahmenteilen 6, 7 und/oder den Strebenteilen 24, 24' in Verbindungsstellung abgestützt ist.

## Patentansprüche

1. Cabriolet-Fahrzeug, dessen ein Verdeck (2) tragendes Verdeckgestell (1) mit symmetrisch zur Fahrzeuglängsachse (3) angeordneten Seitenrahmenteilen (6, 7) versehen ist, die jeweils einenends im Heckbereich der Fahrzeugkarosserie abgestützt und anderenends über ein am oberen Querholm eines Windschutzscheibenrahmens anlegbares Dachspitzenteil (13) verbunden sind **dadurch gekennzeichnet, daß** das Verdeckgestell (1) als ein aus Strangpreßprofilteilen und/oder Druckgußteilen (6, 7, 13, 15, 17, 24, 24') bestehendes Leichtbautragwerk in Form eines starren Gitterverbundrahmens ausgebildet ist, auf den das als Hardtop oder Softtop ausgebildete Verdeck (2) aufsetzbar ist.

2. Cabriolet-Fahrzeug nach Anspruch 1, **dadurch gekennzeichnet, daß** das Leichtbautragwerk ganz oder überwiegend aus Aluminium besteht.

3. Cabriolet-Fahrzeug nach Anspruch 1 oder 2, **dadurch gekennzeichnet, daß** die Strangpreßprofil- und/oder Druckgußteile (6, 7, 13, 15, 17, 24, 24') in ihrer Querschnittskontur zumindest teilweise als Aufnahmeprofil (25, 30, 30') ausgebildet sind, an dem bei der Montage des Verdecks (2) ein an diesem vorgesehenes Halteteil (P, 33, 33'', 36) festlegbar ist.

4. Cabriolet-Fahrzeug nach einem der Ansprüche 1 bis 3, **dadurch gekennzeichnet, daß** das Leichtbautragwerk mit jeweiligen Verbindungsknoten (9, 9'; 10, 10'; 11, 11'; 12, 12') zwischen den Strangpreßprofil- und/oder Druckgußteilen den starren Gitterverbundrahmen bildet, auf dem das Aufsetzdach (2) abgestützt ist.

5. Cabriolet-Fahrzeug nach einem der Ansprüche 1 bis 4, **dadurch gekennzeichnet, daß** das Leichtbautragwerk in seinem rückwärtigen Bereich mit einem sich in Querrichtung des Fahrzeugs erstreckenden Überrollbügel (15) versehen ist, der jeweils endseitig in einem auch das einstükkig ausgebildete Seitenrahmenteil (6, 7) und einen heckseitigen Spannbügel (17) halternden gemeinsamen Haupt-Verbindungsknoten (11, 11') abgestützt ist.

6. Cabriolet-Fahrzeug nach Anspruch 5, **dadurch gekennzeichnet, daß** der Haupt-Verbindungsknoten (11, 11') von einem als Druckgußteil ausgebildeten Stützkörper (18) gebildet ist, der mit dem Spannbügel (17), dem Überrollbügel (15) und/oder dem Seitenrahmenteil (6, 7) verschweißt ist.

7. Cabriolet-Fahrzeug nach einem der Ansprüche 1 bis 6, **dadurch gekennzeichnet, daß** die Seitenrahmenteile (6, 7) jeweils über ein sich im wesentlichen parallel zur Fahrzeuglängsachse (3) erstreckendes und die Dachkontur im rückwärtigen Bereich des Verdeckgestells (1) definierendes Strebenteil (24, 24') mit dem heckseitigen Spannbügel (17) verbunden sind.

8. Cabriolet-Fahrzeug nach Anspruch 7, **dadurch gekennzeichnet, daß** das jeweils einenends in einem Verbindungsknoten (10, 10') am Seitenrahmenteil (6, 7) abgestützte Strebenteil (24, 24') im Verlauf seiner Stützkontur den Überrollbügel (15) untergreift und am heckseitigen Spannbügel (17) in einem weiteren Verbindungsknoten (12, 12') abgestützt ist.

9. Cabriolet-Fahrzeug nach Anspruch 7 oder 8, **dadurch gekennzeichnet, daß** das Strebenteil (24, 24') jeweils sowohl mit den Verbindungsknoten (10, 10') des Seitenrahmenteils (6, 7) als auch dem Verbindungsknoten (12, 12') des Spannbügels (17) verschweißt ist.

10. Cabriolet-Fahrzeug nach einem der Ansprüche 1 bis 9, **dadurch gekennzeichnet, daß** das Strangpreßprofil und/oder Druckgußteil für den Bereich der Dachspitze (13) im Querschnitt als Rinnenprofil (25) ausgebildet und an dessen in Einbaulage vorderen Auflageschenkel (27) oberseitig das Hard- oder Softtop (2') abgestützt ist.

11. Cabriolet-Fahrzeug nach Anspruch 10, **dadurch gekennzeichnet, daß** am Rinnenprofil (25) eine einerseits an dessen Auflageschenkel (27) abgestützte Abdeckblende (28) vorgesehen ist, die andererseits randseitig das Hard- oder Softtop (2') im Bereich einer Dichtverbindung (29) übergreift.

12. Cabriolet-Fahrzeug nach einem der Ansprüche 1 bis 11, **dadurch gekennzeichnet, daß** die Druckguß- und/oder Strangpreßprofilteile im Bereich des Seitenrahmens (6, 7) jeweils als nach unten offenes U-Profil (30, 30') ausgebildet sind und an dessen Basisschenkel (31) zusätzlich ein randseitig das Hard- oder Softtop (2') untergreifender und zu diesen hin gerichteter Tragschenkel (32, 32') vorgesehen ist.

13. Cabriolet-Fahrzeug nach Anspruch 12, **dadurch gekennzeichnet, daß** das U-Profil (30) im Bereich des Tragschenkels (32) mit einer diesen randseitig übergreifenden Deckblende (33) verbunden ist und zwischen deren freien Ende (33') und dem Tragschenkel (32) das Hard- oder Softtop (2')randseitig festgelegt ist.

14. Cabriolet-Fahrzeug nach Anspruch 12 oder 13, **dadurch gekennzeichnet, daß** im Bereich des Tragschenkels (32) eine ein Gegenglied (36) der Deckblende (33) aufnehmende Rastprofilform (37) vorgesehen ist.

15. Cabriolet-Fahrzeug nach einem der Ansprüche 12 bis 14, **dadurch gekennzeichnet, daß** das Hardtop (2') den Tragschenkel (32; 32') übergreift und mit einer Randabkantung (33''; 36) an einem Halteschenkel (39) des U-Profils (30, 30') festgelegt ist.

16. Cabriolet-Fahrzeug nach einem der Ansprüche 1 bis 15, **dadurch gekennzeichnet, daß** der Überrollbügel (15) in das Hardtop (2') integriert ist.

17. Cabriolet-Fahrzeug nach einem der Ansprüche 1 bis 16, **dadurch gekennzeichnet, daß** das Hardtop (2') mit randseitig parallel zur Fahrzeuglängsachse (3) verlaufenden Aussteifungsbereichen (41, 42) versehen ist.

18. Cabriolet-Fahrzeug nach einem der Ansprüche 1 bis 17, **dadurch gekennzeichnet, daß** das Hardtop (2') mit verschließbaren Durchgangsöffnungen (43) versehen ist, über die in Öffnungsstellung jeweilige Stützteile eines Dachgepäckträgers am Leichtbautragwerk in Verbindungsstellung verbringbar sind.

## Claims

1. A convertible vehicle of which the top frame (1) supporting a top (2) is provided with, disposed symmetrically in relation to the longitudinal axis (3) of the vehicle, side frame parts (6, 7) each of which is at one end supported in the rear part of the vehicle body work and being at the other end connected by means of a roof top part (13) which can be laid over the upper cross-strut of a windscreen frame, **characterised in that** the top frame (1) is constructed as a lightweight structure in the form of a rigid grid bonded frame consisting of extruded sections and/or pressure die cast parts (6, 7, 13, 15, 17, 24, 24') and onto which the top (2), which may be constructed as a hard top or a soft top, can be fitted.

2. A convertible vehicle according to claim 1, **characterised in that** the lightweight supporting structure consists entirely or predominantly of aluminium.

3. A convertible vehicle according to claim 1 or 2, **characterised in that** the extruded section and/or pressure die cast parts (6, 7, 13, 15, 17, 24, 24') are in their cross-sectional contour at least partially constructed as an accommodating profile (25, 30, 30') on which, when the top (2) is fitted, a retaining part (P, 33, 33", 36) provided on this latter can be fixed.

4. A convertible vehicle according to one of claims 1 to 3, **characterised in that** with respective connecting joints (9, 9', 10, 10', 11, 11', 12, 12') between the extruded section and/or pressure die cast parts, constitutes the rigid grid frame on which the attachable roof (2) is supported.

5. A convertible vehicle according to one of claims 1 to 4, **characterised in that** the lightweight supporting structure is in its rear portion provided with a roll-over bar (15) extending in the transverse direction of the vehicle and which has its ends braced in common main connecting joints (11, 11') which support the integrally constructed side frame part (6, 7) and a rear curved tensioning member (17).

6. A convertible vehicle according to claim 5, **characterised in that** the main connecting joints (11, 11') are constituted by a bracing member (18) constructed as a pressure die cast part which is welded to the tensioning member (17), the roll-over bar (15) and/or the side frame part (6, 7).

7. A convertible vehicle according to one of claims 1 to 6, **characterised in that** the side frame parts (6, 7) are each connected to the rear curved tensioning member (17) via a strut part (24, 24') extending substantially parallel with the longitudinal axis (3) of the vehicle and defining the roof contour in the rear part of the top frame (1).

8. A convertible vehicle according to claim 7, **characterised in that** over the course of its supporting contour, the strut part (24, 24') which at one end is braced in a connecting joint (10, 10') on the side frame part (6, 7), engages under the roll-over bar (15) and is braced in a further connecting joint (12, 12') on the rear curved tensioning member (17).

9. A convertible vehicle according to claim 7 or 8, **characterised in that** the strut part (24, 24') is welded both to the connecting joints (10, 10') of the side frame part (6, 7) as well as to the connecting joints (12, 12') of the curved tensioning member (17).

10. A convertible vehicle according to one of claims 1 to 9, **characterised in that** the extruded section and/or pressure die cast part is for the region of the roof tip (13) constructed in cross-section as a channel section (25) and **in that** the hard or soft top (2') is supported on the top of the front support member (27), in the installed position.

11. A convertible vehicle according to claim 10, **characterised in that** there is on the channel section (25) a covering facing (28) braced at one end on its supporting member (27) while at the other end its edge engages over the portion of a sealing connection (39) of the hard or soft top (2').

12. A convertible vehicle according to one of claims 1 to 11, **characterised in that** the pressure die cast and/or extruded section parts are in the region of the side frame (6, 7) respectively constructed as downwardly open channel sections (30, 30') on the bottom arm (31) of which there is in addition a support arm (32, 32') engaging under and directed at the hard or soft top (2').

13. A convertible vehicle according to claim 12, **characterised in that** in the region of the support arm (32) the channel section (30) is connected to a covering facing (33) which engages over this at the sides and between the free end (33') of which and the supporting member (32), the hard or soft top (2') is fixed.

14. A convertible vehicle according to claim 12 or 13, **characterised in that** there is in the region of the support arm (32) a catch section (37) which accommodates a mating member (36) of the covering facing (33).

15. A convertible vehicle according to one of claims 12 to 14, **characterised in that** the hard top (2') engages over the support member (32; 32') and is fixed on a retaining arm (39) of the channel section (30, 30') via a marginal angled-over portion (33"; 36).

16. A convertible vehicle according to one of claims 1 to 15, **characterised in that** the roll-over bar (15) is integrated into the hard top (2').

17. A convertible vehicle according to one of claims 1 to 16, **characterised in that** the hard top (2') is provided with stiffening portions (41, 42) extending along the sides of and parallel with the longitudinal axis (3) of the vehicle.

18. A convertible vehicle according to one of claims 1 to 17, **characterised in that** the hard top (2') has in it apertures (43) which are adapted to be closed and through which the supporting parts of a roof luggage rack on the lightweight supporting structure can be moved into the connecting position.

## Revendications

1. Véhicule convertible dont une ossature (1) qui porte la capote (2) est munie de pièces de cadre latéral (6, 7) symétriques à l'axe longitudinal (3) du véhicule, qui s'appuient par une extrémité dans la zone arrière de la carrosserie du véhicule et par l'autre extrémité à une partie de sommet de toit (13) qui peut s'appliquer contre la traverse d'un châssis de pare-brise,
**caractérisé en ce que**
l'ossature (1) est réalisée sous la forme d'une construction légère composée de pièces de profilé extrudé et/ou de pièces de fonte sous pression (6, 7, 13, 15, 17, 24, 24') sous la forme d'un cadre en réseau rigide, sur lequel s'applique la capote (2) réalisée sous la forme d'un toit rigide ou d'un toit souple.

2. Véhicule convertible selon la revendication 1,
**caractérisé en ce que**
l'ossature en construction légère est en totalité ou principalement en aluminium.

3. Véhicule convertible selon l'une quelconque des revendications 1 ou 2,
**caractérisé en ce que**
les pièces de profilé extrudé et/ou de coulée en pression (6, 7, 13, 15, 17, 24, 24') ont dans le contour de leur section, au moins en partie un profil de réception (25, 30, 30') permettant de fixer au montage de la capote (2), une pièce de fixation (P, 33, 33", 36) prévue sur celle-ci.

4. Véhicule convertible selon l'une quelconque des revendications 1 à 3,
**caractérisé en ce que**
l'ossature en construction légère avec les points de liaison respectifs (9, 9' ; 10, 10' ; 11, 11' ; 12, 12') entre les pièces en profilé extrudé et/ou en fonte sous pression, forme l'ossature de réseau rigide sur laquelle s'appuie la couverture (2).

5. Véhicule convertible selon l'une quelconque des revendications 1 à 4,
**caractérisé en ce que**
l'ossature en construction légère présente dans sa zone arrière, un arceau de renversement (15) transversal au véhicule, cet arceau s'appuyant par ses extrémités dans une pièce de liaison principale (11, 11'), également réalisée comme pièce de cadre latéral (6, 7) en une seule partie et portant un arceau tendeur (17) arrière.

6. Véhicule convertible selon la revendication 5,
**caractérisé en ce que**
le point de liaison principal (11, 11') est constitué par un organe d'appui (18) en forme de pièce coulée sous pression, soudée à l'arceau tendeur (17), à l'arceau de renversement (15) et/ou à la partie de cadre latéral (6, 7).

7. Véhicule convertible selon l'une quelconque des revendications 1 à 6,
**caractérisé en ce que**
les parties de cadre latéral (6, 7) sont reliées à l'arceau tendeur arrière (17) respectivement par une pièce formant entretoise (24, 24') essentiellement parallèle à l'axe longitudinal (3) du véhicule et définissant le contour de toit dans la zone arrière de l'ossature (1).

8. Véhicule convertible selon la revendication 7,
**caractérisé en ce que**
la pièce formant entretoise (24, 24') qui s'appuie chaque fois par une extrémité au niveau d'un point de liaison (10, 10') contre la partie de cadre latéral (6, 7), vient prendre l'arceau de renversement (15) par son contour d'appui et s'appuie contre l'arceau tendeur (17) arrière, en un autre point de liaison (12, 12').

9. Véhicule convertible selon l'une quelconque des revendications 7 ou 8,
**caractérisé en ce que**
la pièce formant entretoise (24, 24') est soudée à la fois au noeud de liaison (10, 10') de la pièce de cadre latéral (6, 7) et au noeud de liaison (12, 12') de l'arceau tendeur (17).

10. Véhicule convertible selon l'une quelconque des revendications 1 à 9,
**caractérisé en ce que**
le profilé extrudé et/ou la pièce en fonte sous pression réalisée pour la zone du sommet de toit (13) comporte une section en forme de profilé à goulotte (25), et sa branche d'appui (27) avant en position de montage, soutient dans sa partie supérieure le toit rigide ou le toit souple (2').

11. Véhicule convertible selon la revendication 10,
**caractérisé en ce que**
le profilé en forme de goulotte (25) comporte d'un côté un cache (28) s'appuyant sur sa branche d'appui (27) et qui de l'autre côté, recouvre le bord du toit rigide ou du toit souple (2'), au niveau d'une liaison d'étanchéité (29).

12. Véhicule convertible selon l'une quelconque des revendications 1 à 11,
**caractérisé en ce que**
les pièces de fonte sous pression et/ou d'extrusion sont réalisées au niveau du cadre latéral (6, 7), chaque fois sous la forme d'un profilé en U (30, 30') ouvert vers le bas et dont la branche de base (31) comporte en plus une branche de support (32, 32') saisissant par en dessous le bord du toit rigide ou du toit souple (2') et dirigée vers celui-ci.

13. Véhicule convertible selon la revendication 12,
**caractérisé en ce que**
le profilé en U (30) est relié au niveau de la branche de support (32) à un cache (33) qui vient par-dessus le bord de celui-ci et le bord du toit rigide ou du toit souple (2') est fixé entre son extrémité libre (33') et la branche de support (32).

14. Véhicule convertible selon l'une quelconque des revendications 12 ou 13,
**caractérisé en ce qu'**
au niveau de la branche de support (32), il est prévu une forme de profil d'encliquetage (37) recevant une pièce complémentaire (36) du cache (33).

15. Véhicule convertible selon l'une quelconque des revendications 12 à 14,
**caractérisé en ce que**
le toit rigide (2') vient prendre par-dessus la branche de support (32, 32') et est fixé par un bord replié (33", 38) à une branche de fixation (39) du profil en U (30, 30').

16. Véhicule convertible selon l'une quelconque des revendications 1 à 15,
**caractérisé en ce que**
l'arceau de renversement (15) est intégré au toit rigide (2').

17. Véhicule convertible selon l'une quelconque des revendications 1 à 16,
**caractérisé en ce que**
le toit rigide (2') est muni au niveau du bord de zones de rigidification (41, 42) parallèles à l'axe longitudinal du véhicule (3).

18. Véhicule convertible selon l'une quelconque des revendications 1 à 17,
**caractérisé en ce que**
le toit rigide (2') est muni d'ouvertures de passage (43) susceptibles d'être fermées, par lesquelles en position d'ouverture on peut fixer des pièces de support d'un porte-bagages sur l'ossature en construction légère.
